# EUROPEAN PATENT SPECIFICATION

(11) **EP 2 786 926 B1**
(45) Date of publication and mention of the grant of the patent: **10.06.2015**
(21) Application number: 13162071.8
(22) Date of filing: 03.04.2013
(51) Int. Cl.: B62K 15/00, B62K 9/00

(54) **Folding balance bike**
Faltbares Laufrad
Vélo d'équilibre pliable

(43) Date of publication of application: 08.10.2014
(73) Proprietor: Chen, Wang-Chuan, Taichung City (TW)
(72) Inventor: Chen, Wang-Chuan, Taichung City (TW)
(74) Representative: Viering, Jentschura & Partner Patent- und Rechtsanwälte

(56) References cited:
- WO-A1-02/14142
- WO-A1-2004/014717
- IT-A1- MI20 110 272
- JP-A- 2002 145 157
- NL-A- 289 292
- US-A1- 2007 273 126
- US-A1- 2013 020 777

## Description

### BACKGROUND OF THE INVENTION

### 1. Field of the Invention

The present invention relates to a balance bike and, more particular, to a balance bike to be foldable into a compact form, facilitating transport and storage.

### 2. Description of the Related Art

A balance bike is a training bicycle built without any pedals, crankset and chain. The balance bike helps children learn to balance, steer, walk, glide, and push themselves forward thereon without worrying about pedaling. To function properly, the balance bike must be small enough that a child can walk the balance bike while sitting comfortably in a saddle of the balance bike, putting both feet flat on the ground. Thus, the child first walks the balance bike while standing over the saddle, then while sitting in the saddle. Eventually, the child feels comfortable enough to run and scoot while riding the balance bike, then to lift both feet off the ground and cruise while balancing on two wheels of the balance bike.

Further, the conventional balance bike has a fixed wheelbase defined between centers of front and rear wheels thereof to cause the balance bike inconvenient for the user and inefficient for storage and transport. Moreover, the conventional balance bike has a fixed seat height defined from the saddle to the ground. However, the fixed seat height can not be adjusted to accommodate the child's growth.

Thus, a need exists for a novel balance bike that mitigates and/or obviates the above disadvantages.

JP 2002 145 157 A represents the closest prior art and discloses a folding balance bike comprising: a frame including a body portion; a front wheel assembly pivotally mounted on one end of the frame, with the front wheel assembly including a front wheel; and a rear wheel assembly pivotally mounted on the other end of the frame opposite to the front wheel assembly, with the rear wheel assembly including a rear wheel rotatably mounted therein; wherein the rear wheel assembly is pivotable with respect to and able to be received into the groove of the frame to adjust a wheelbase of the folding balance bike to cause the folding balance bike operable between an operative state and a stored state, with the wheelbase defined as a horizontal distance that extending between centers of front and rear wheels; and wherein when the folding balance bike is in the operative state, the rear wheel of the rear wheel assembly is exposed from and securely disposed at the other end of the frame; and wherein when the folding balance bike is in the stored state, the rear wheel of the rear wheel assembly is received in the groove of the frame; and wherein the wheelbase of the folding balance bike arranged in the stored state is shorter than that arranged in the operative state to facilitate transport and storage.

### SUMMARY OF THE INVENTION

It is an object of the present invention to provide a folding balance bike to be able to adjust a wheelbase between the operative state and the stored state to facilitate transport and storage.

It is another object of the present invention to provide a folding balance bike to be able to adjust a seat height to be suitable for various size requirements.

Other objects, advantages, and new features of the present invention will become apparent from the following detailed description of the invention when considered in conjunction with the accompanied drawings.

According to the present invention a folding balance bike as defined in claim 1 is provided. The dependent claims show some examples of such a bike.

### BRIEF DESCRIPTION OF THE DRAWINGS

FIG.1 shows a perspective view of a folding balance bike according to the present invention.
FIG. 2 shows a partial exploded, perspective view of the folding balance bike of FIG. 1.
FIG. 3 shows another partial exploded, perspective view of the folding balance bike of FIG. 1.
FIG. 4 shows a partial cross-sectional view of the folding balance bike shown in FIG. 1.
FIG. 5 shows a cross-sectional view taken along line 5-5 of FIG. 4.
FIG 6 shows a partial, continued view of the folding balance bike shown in FIG. 5, and illustrates a first restrainer disengaged from a first fastener.
FIG 7 shows a continued view of the folding balance bike shown in FIG 4, and illustrates a rear wheel assembly pivoted with respect to a frame.
FIG. 8 shows a continued view of the folding balance bike shown in FIG 7, and illustrates a rear wheel of the rear wheel assembly received into the frame.
FIG 9 shows a continued view of the folding balance bike shown in FIG 4, and illustrates a saddle adjusted with respect to the frame.

### DETAILED DESCRIPTION OF THE INVENTION

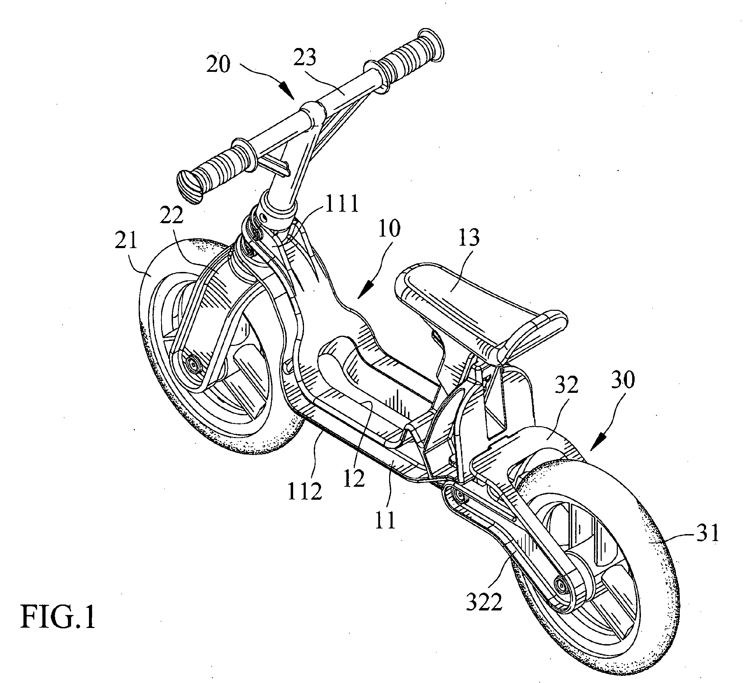

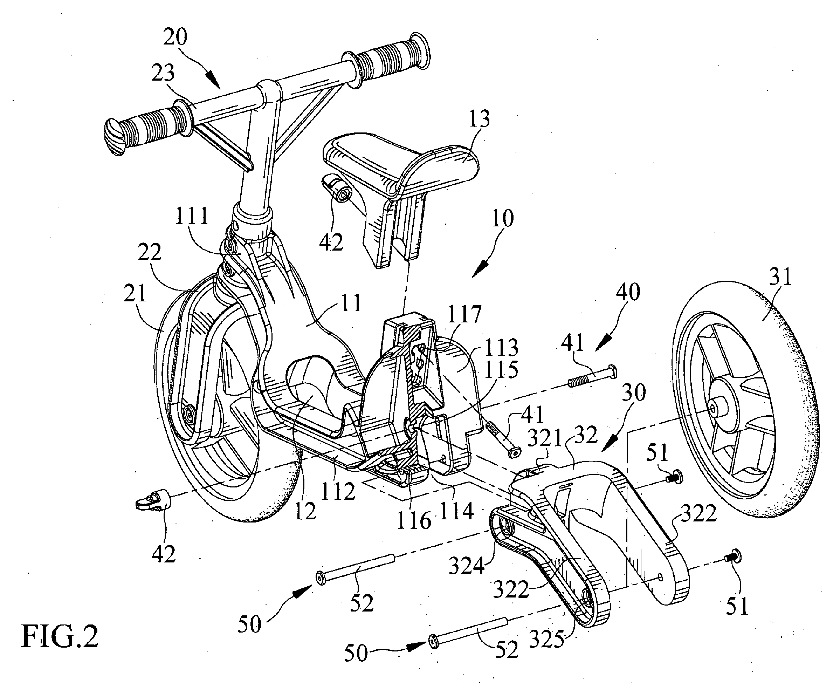

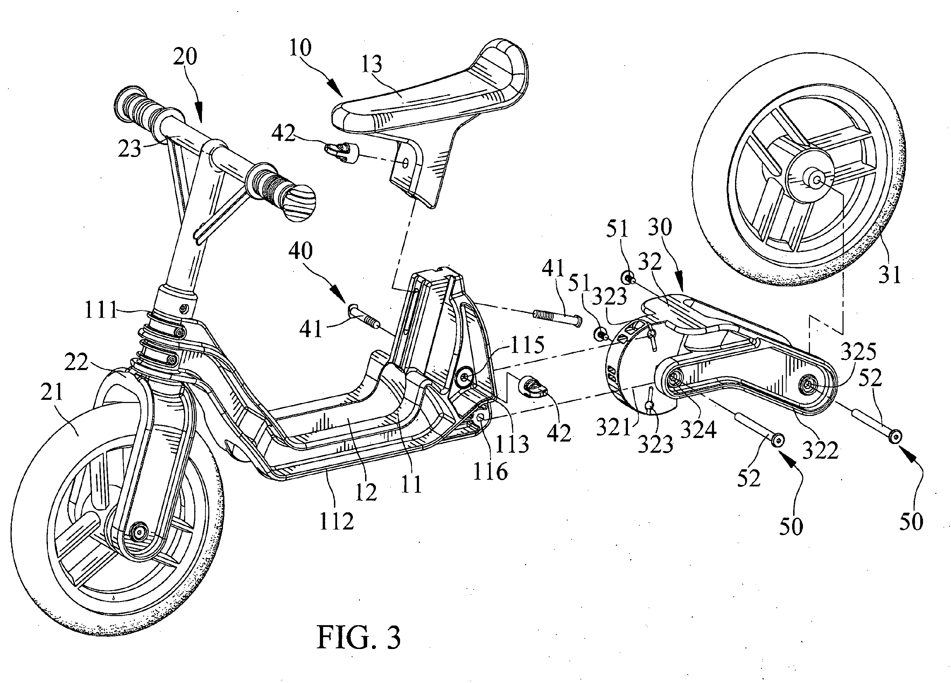

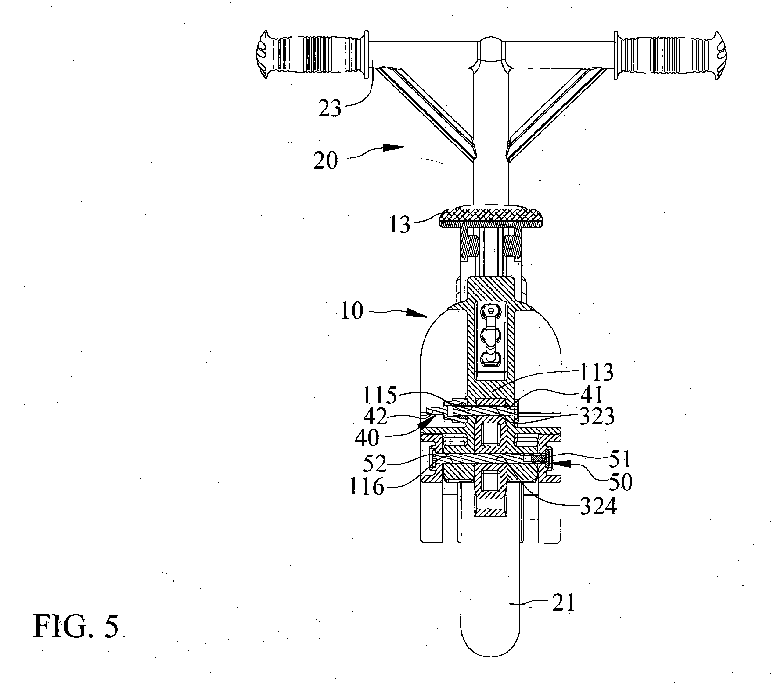

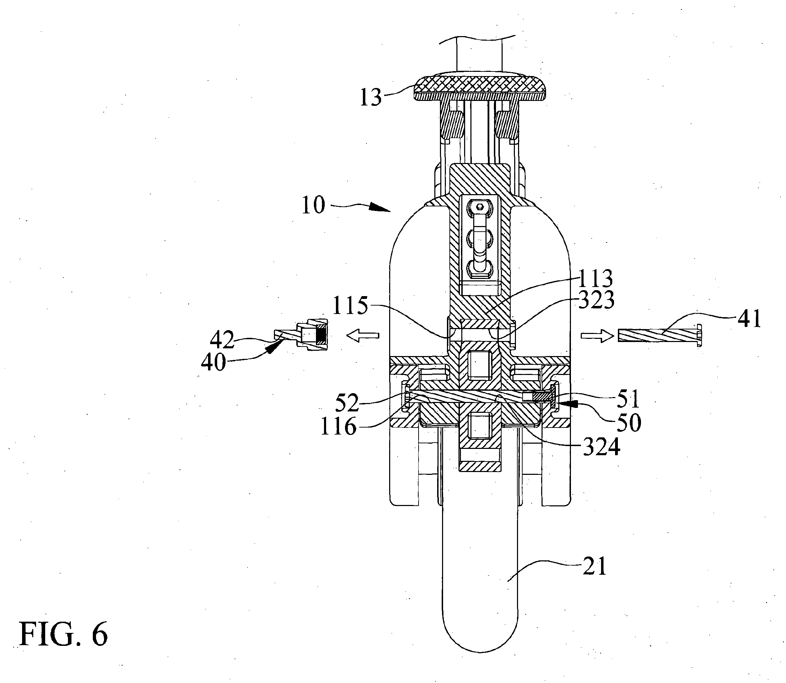

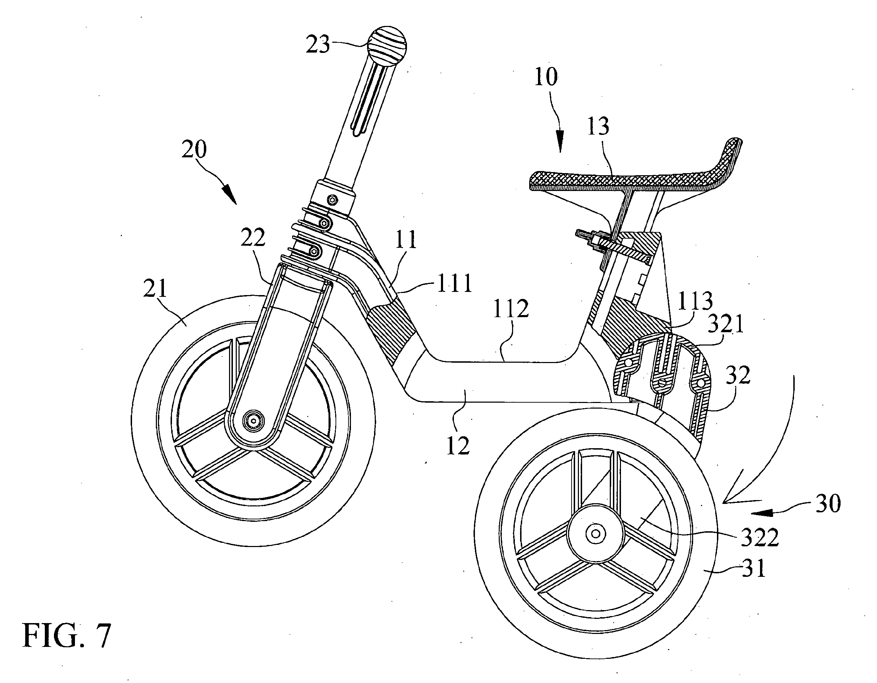

FIGS. 1 through 9 show a folding balance bike according to the present invention shown in the drawings. The folding balance bike includes a frame 10, a front wheel assembly 20 pivotally mounted on one end of the frame 10, and a rear wheel assembly 30 pivotally mounted on the other end of the frame 10 opposite to the front wheel assembly 20. The front wheel assembly 20 is pivotable with respect to the frame 10 to steer the folding balance bike. The rear wheel assembly 30 is pivotable with respect to and able to be received into the frame 10 to adjust a wheelbase L of the folding balance bike to cause the folding balance bike operable between an operative state and a stored state. The wheelbase L is defined as a horizontal distance that extending between centers of front and rear wheels 21 and 31 respectively rotatably mounted in the front and rear wheel assemblies 20 and 30. When the folding balance bike is in the operative state, the rear wheel 31 of the rear wheel assembly 30 is exposed from and securely disposed at the other end of the frame 10. When the folding balance bike is in the stored state, the rear wheel 31 of the rear wheel assembly 30 is received in the frame 10. In particular, the wheelbase L of the folding balance bike arranged in the stored state is shorter than that arranged in the operative state to facilitate transport and storage.

The frame 10 includes a body portion 11 and a groove 12 extending through the body portion 11 and disposed between the front and rear wheel assemblies 20 and 30. The body portion 11 defines front, middle, and rear sections 111, 112, and 113 thereof. The front section 111 of the body portion 11 is pivotally connected with the front wheel assembly 20. The middle section 112 of the body portion 11 is extended between the front and rear sections 111 and 113 and spaced out two parts by the groove 12. The rear section 113 of the body portion 11 is pivotally connected with the rear wheel assembly 30 and longitudinally extended to connect with a saddle 13 capable of moving relatively to the rear section 113 of the body portion 11. A slot 114 is formed at one distal end of the rear section 113 opposite to the saddle 13. The body portion 11 further includes a locking hole 115 and a pivoting hole 116 extending transversely across the rear section 113 and interconnecting with the slot 114 thereof.

The front wheel assembly 20 includes the front wheel 21 rotatably mounted in a fork 22, which is pivotally mounted on the front section 111 of the body portion 11 and connected with and controlled by a handlebar 23 adapted to be gripped and pivoted with respect to the frame 10 by a user to steer the folding balance bike.

The rear wheel assembly 30 includes the rear wheel 31 rotatably mounted on a distal end of a swing fork 32 thereof. The swing fork 32 includes a connecting portion 321 and two arm portions 322 respectively extended from two sides of the connecting portion 321. The connecting portion 321 of the swing fork 32 is engaged into the slot 114 of the body portion 11. The swing fork 32 further includes a plurality of locking apertures 323 extending transversely through two opposite side walls of the connecting portion 321 thereof, first and second pivoting apertures 324 and 325 respectively extending transversely through two opposite ends of each of the two arm portions 322 thereof. In particular, the plurality of locking apertures 323 include two locking apertures 323 respectively arranged at two longitudinal opposite ends of the connecting portion 321, and one of the two locking apertures 323 can be aligned and interconnected with the locking hole 115 of the body portion 11 of the frame 10, when the rear wheel assembly 30 is pivoted with respect to the frame 10. In particular, the first pivoting aperture 324 is extended through one end of each of the two arm portions 322 and the two opposite side walls of the connecting portion 321.

The folding balance bike further includes two first fastening assemblies 40 and two second fastening assemblies 50 mounted therein. Each of the two first fastening assemblies 40 includes a first fastener 41 and first retainer 42 selectively engaged with the first fastener 41. One of the two first fastening assemblies 40 is engageable into one of the two locking apertures 323 of the swing fork 32 of the rear wheel assembly 30 and the locking hole 115 of the body portion 11 of the frame 10 to cause the rear wheel assembly 30 selectively fixed with respect to the frame 10. Thus, the rear wheel 31 is selectively received into the groove 12 of the frame 10 to cause the folding balance bike operable between the operative state and the stored state. Each of the two second fastening assemblies 50 includes a second fastener 51 and second retainer 52 engaged with the second fastener 51. One of the two second fastening assemblies 50 is engaged into the first pivoting aperture 324 of the swing fork 32 of the rear wheel assembly 30 and the pivoting hole 116 of the body portion 11 of the frame 10 to cause the rear wheel assembly 30 pivotally connected with the frame 10. The other one of the two second fastening assemblies 50 is engaged into the second pivoting aperture 325 of the swing fork 32 and the rear wheel 31 of the rear wheel assembly 30.

When the folding balance bike is in the operative state, one of the two first fastening assemblies 40 is engaged into one of the two locking apertures 323 of the swing fork 32 of the rear wheel assembly 30 disposed adjacent to the saddle 13 and the locking hole 115 of the body portion 11 of the frame 10 to cause the rear wheel assembly 30 securely fixed with respect to the frame 10. Thus, the rear wheel 31 is exposed from and disposed at the other end of the frame 10.

However, the first retainer 42 is disengageable from the first fastener 41 of one of the two first fastening assemblies 40 separated from one of the two locking apertures 323 of the swing fork 32 of the rear wheel assembly 30 disposed adjacent to the saddle 13 and the locking hole 115 of the body portion 11 of the frame 10 to cause the rear wheel assembly 30 pivotable with respect to the frame 10.

Furthermore, the rear wheel assembly 30 is pivoted with respect to the frame 10 to cause the other one of the two locking apertures 323 of the swing fork 32 of the rear wheel assembly 30 aligned with the locking hole 115 of the body portion 11 of the frame 10, and the two arm portions 322 of the swing fork 32 are abutted against the two parts of the middle section 112 of the body portion 11.

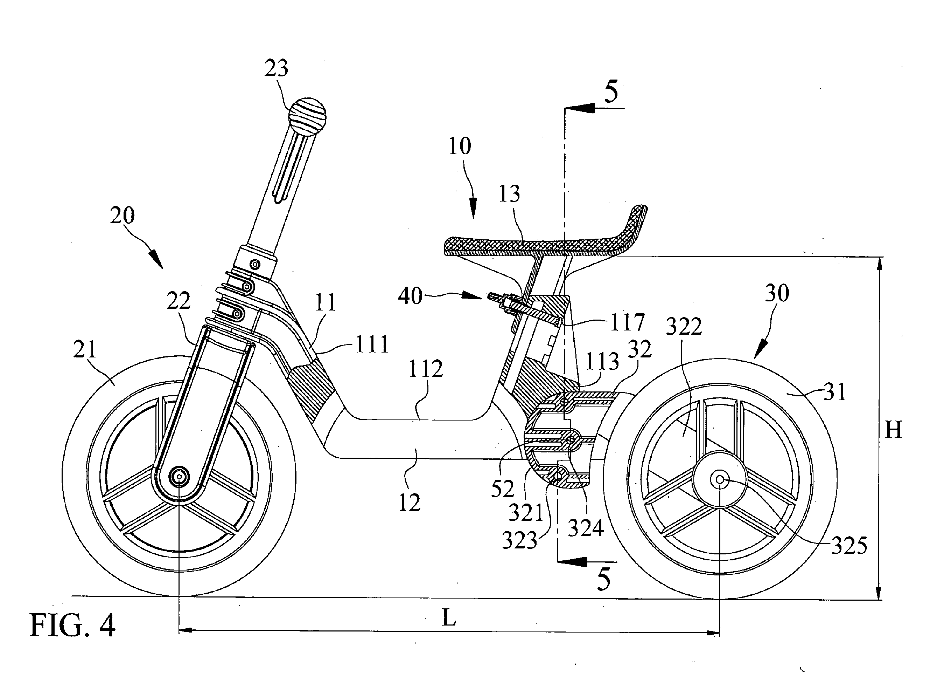

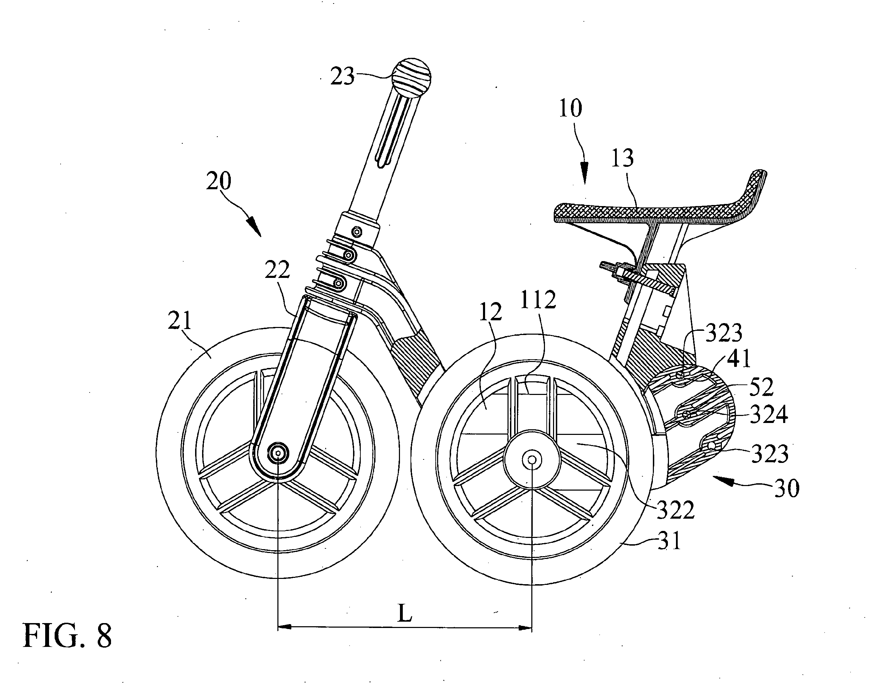

When the folding balance bike is in the stored state, one of the two first fastening assemblies 40 is reengaged into the other one of the two locking apertures 323 of the swing fork 32 of the rear wheel assembly 30 and the locking hole 115 of the body portion 11 of the frame 10 to cause the rear wheel assembly 30 securely fixed with respect to the frame 10. Thus, the rear wheel 31 is received into the groove 12 of the frame 10. Here, the folding balance bike has the wheelbase L shown in FIG 8 shorter than that of FIG 4.

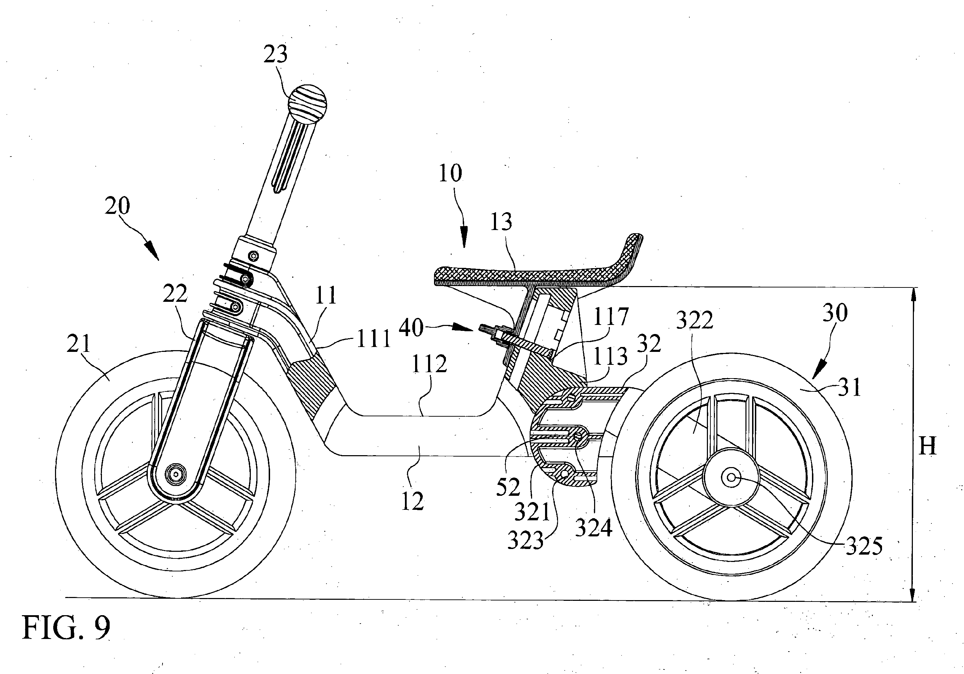

Additionally, a seat height H is defined as a vertical distance that extending from the saddle 13 of the frame 10 to a horizontal plane, such as the ground when the folding balance bike is oriented perpendicular to the horizontal plane. The body portion 11 further includes a plurality of adjusting bores 117 longitudinally arranged and extending through a distal end of the rear section 113 opposite to the rear wheel assembly 30. The other one of the two first fastening assemblies 40 is engageable through the saddle 13 and one of the plurality of adjusting bores 117 to cause the saddle 13 selectively connected with the frame 10. When the other one of the two first fastening assemblies 40 is disengaged from the saddle 13 and one of the plurality of adjusting bores 117, the saddle 13 enables to move in relation to the rear section 113 of the body portion 11. Thus, the other one of the two first fastening assemblies 40 is able to be reengaged into another of the plurality of adjusting bores 117 and the saddle 13 to adjust the seat height H to be suitable for various size requirements. Here, the folding balance bike has the seat height H shown in FIG. 9 lower than that of FIG 4.

## Claims

1. A folding balance bike comprising:
a frame (10) including a body portion (11), a groove (12) extending through the body portion (11), and a saddle (13) connected with the body portion (11);
a front wheel assembly (20) pivotally mounted on one end of the frame (10), with the front wheel assembly (20) including a front wheel (21); and
a rear wheel assembly (30) pivotally mounted on the other end of the frame (10) opposite to the front wheel assembly (20), with the rear wheel assembly (30) including a rear wheel (31) rotatably mounted therein;
wherein the rear wheel assembly (30) is pivotable with respect to and able to be received into the groove (12) of the frame (10) to adjust a wheelbase (L) of the folding balance bike to cause the folding balance bike operable between an operative state and a stored state, with the wheelbase (L) defined as a horizontal distance that extending between centers of front and rear wheels (21, 31) ; and
wherein when the folding balance bike is in the operative state, the rear wheel (31) of the rear wheel assembly (30) is exposed from and securely disposed at the other end of the frame (10); and
wherein when the folding balance bike is in the stored state, the rear wheel (31) of the rear wheel assembly (30) is received in the groove (12) of the frame (10); and
wherein the wheelbase (L) of the folding balance bike arranged in the stored state is shorter than that arranged in the operative state to facilitate transport and storage; and
wherein the body portion (11) includes a locking hole (115) extending therethrough, with the rear wheel assembly (30) including the rear wheel (31) rotatably mounted on a distal end of a swing fork (32) thereof, with the swing fork (32) including a connecting portion (321) and two arm portions (322) respectively extended from two sides of the connecting portion (321), with a plurality of locking apertures (323) extending through the connecting portion (321), with one of the plurality of locking apertures (323) able to be aligned and interconnected with the locking hole (115) of the body portion (11), with a first fastening assembly (40) engageable into one of the plurality of locking apertures (323) of the swing fork (32) and the locking hole (115) of the body portion (11) to cause the rear wheel assembly (30) selectively fixed with respect to the frame (10); and
wherein a slot (114) is formed at one distal end of the body portion (11) opposite to the saddle (13), with the connecting portion (321) of the swing fork (32) engaged into the slot (114) of the body portion (11); and
wherein the body portion (11) includes a pivoting hole (116) extending therethrough and interconnecting with the slot (114) thereof, with the swing fork (32) including first and second pivoting apertures (324,325) respectively extending through two opposite ends of each of the two arm portions (322) thereof, with two second fastening assemblies (50) respectively engaged into the first pivoting aperture (324) of the swing fork (32) and the pivoting hole (116) of the body portion (11) and engaged into the second pivoting aperture (325) of the swing fork (32).

2. The folding balance bike as claimed in claim 1, wherein the body portion (11) defines front, middle, and rear sections (111, 112, 113) thereof, with the front section (111) of the body portion (11) pivotally connected with the front wheel assembly (20), with the middle section (112) of the body portion (11) extended between the front and rear sections (111,113) and spaced out two parts by the groove (12), with the rear section (113) of the body portion (11) pivotally connected with the rear wheel assembly (30) and connected with the saddle (13).

3. The folding balance bike as claimed in claim 2, wherein the front wheel assembly (20) includes the front wheel (21) rotatably mounted in a fork (22) pivotally mounted on the front section (111) of the body portion (11) and connected with and controlled by a handlebar (23) adapted to be gripped and pivoted with respect to the frame (10) by a user to steer the folding balance bike.

4. The folding balance bike as claimed in claim 2, wherein when the folding balance bike is in the stored state, the two arm portions (322) of the swing fork (32) are abutted against the two parts of the middle section (112) of the body portion (11).

5. The folding balance bike as claimed in claim 1, wherein the first fastening assembly (40) includes a first fastener (41) and first retainer (42) selectively engaged with the first fastener (41), wherein each of the two second fastening assemblies (50) includes a second fastener (51) and second retainer (52) engaged with the second fastener (51).

6. The folding balance bike as claimed in any one of claims 1-5, wherein a seat height (H) is defined as a vertical distance that extending from the saddle (13) of the frame (10) to a horizontal plane, with the body portion (11) further includes a plurality of adjusting bores (117) longitudinally arranged and extending through a distal end thereof opposite to the rear wheel assembly (30), with a third fastening assembly (40) engageable through the saddle (13) and one of the plurality of adjusting bores (117) to cause the saddle (13) selectively connected with the frame (10).

7. The folding balance bike as claimed in claim 6, wherein when the third fastening assembly (40) is disengaged from the saddle (13) and one of the plurality.of adjusting bores (117), the saddle (13) enables to move in relation to the body portion (11), with the third fastening assembly (40) able to be reengaged into another of the plurality of adjusting bores (117) and the saddle (13) to adjust the seat height (H).

## Patentansprüche

1. Klappbares Balancefahrrad, aufweisend:
einen Rahmen (10), der einen Körperabschnitt (11), eine Nut (12), die sich durch den Körperabschnitt (11) hindurch erstreckt, und einen Sattel (13) aufweist, der mit dem Körperabschnitt (11) verbunden ist;
eine Vorderradanordnung (20), die an dem einen Ende des Rahmens (10) schwenkbar montiert ist, wobei die Vorderradanordnung (20) ein Vorderrad (21) aufweist; und
eine Hinterradanordnung (30), die an dem anderen Ende des Rahmens (10) entgegengesetzt zu der Vorderradanordnung (20) schwenkbar montiert ist, wobei die Hinterradanordnung (30) ein Hinterrad (31) aufweist, das daran drehbar montiert ist;
wobei die Hinterradanordnung (30) in Bezug auf die Nut (12) des Rahmens (10) schwenkbar ist und geeignet ist, in dieser aufgenommen zu werden, um einen Radstand (L) des klappbaren Balancefahrrades einzustellen, um zu bewirken, dass das klappbare Balancefahrrad zwischen einem Betriebszustand und einem Aufbewahrungszustand betreibbar ist, wobei der Radstand (L) als eine horizontale Distanz definiert ist, die sich zwischen Mittelpunkten des Vorder- und Hinterrades (21, 31) erstreckt; und
wobei, wenn das klappbare Balancefahrrad in dem Betriebszustand ist, das Hinterrad (31) der Hinterradanordnung (30) von dem anderen Ende des Rahmens (10) freigelegt ist und an diesem fest angeordnet ist; und
wobei, wenn das klappbare Balancefahrrad in dem Aufbewahrungszustand ist, das Hinterrad (31) der Hinterradanordnung (30) in der Nut (12) des Rahmens (10) aufgenommen ist; und
wobei der Radstand (L) des in dem Aufbewahrungszustand angeordneten klappbaren Balancefahrrades kürzer als jener des in dem Betriebszustand angeordneten ist, um den Transport und die Aufbewahrung zu erleichtern; und
wobei der Körperabschnitt (11) ein Verriegelungsloch (115) aufweist, das sich durch diesen hindurch erstreckt, wobei die Hinterradanordnung (10) das Hinterrad (31) aufweist, das an einem entfernt gelegenen Ende einer Schwinggabel (32) davon drehbar montiert ist, wobei die Schwinggabel (32) einen Verbindungsabschnitt (321) und zwei Armabschnitte (322) aufweist, die sich von zwei Seiten des Verbindungsabschnitts (321) erstrecken, wobei sich eine Mehrzahl von Verriegelungsöffnungen (323) durch den Verbindungsabschnitt (321) hindurch erstreckt, wobei die eine von der Mehrzahl von Verriegelungsöffnungen (323) geeignet ist, zu dem Verriegelungsloch (115) des Körperabschnitts (11) ausgerichtet und mit diesem verbunden zu werden, wobei eine erste Befestigungsanordnung (40) in die eine von der Mehrzahl von Verriegelungsöffnungen (323) der Schwinggabel (32) und das Verriegelungsloch (115) des Körperabschnitts (11) eingreifbar ist, um zu bewirken, dass die Hinterradanordnung (30) in Bezug auf den Rahmen (10) wahlweise fixiert ist; und
wobei ein Schlitz (114) an dem einen entfernt gelegenen Ende des Körperabschnitts (11) entgegengesetzt zu dem Sattel (13) ausgebildet ist, wobei der Verbindungsabschnitt (321) der Schwinggabel (32) in den Schlitz (114) des Körperabschnitts (11) eingreift; und
wobei der Körperabschnitt (11) ein Schwenkloch (116) aufweist, das sich durch diesen hindurch erstreckt und mit dem Schlitz (114) davon verbunden ist, wobei die Schwinggabel (32) erste und zweite Schwenköffnungen (324, 325) aufweist, die sich durch zwei entgegengesetzte Enden jedes der beiden Armabschnitte (322) davon erstrecken, wobei zwei zweite Befestigungsanordnungen (50) in die erste Schwenköffnung (324) der Schwinggabel (32) und das Schwenkloch (116) des Körperabschnitts (11) eingreifen und in die zweite Schwenköffnung (325) der Schwinggabel (32) eingreifen.

2. Klappbares Balancefahrrad nach Anspruch 1, wobei der Körperabschnitt (11) einen vorderen, mittleren und hinteren Bereich (111, 112, 113) davon definiert, wobei der vordere Bereich (111) des Körperabschnitts (11) mit der Vorderradanordnung (20) schwenkbar verbunden ist, wobei sich der mittlere Bereich (112) des Körperabschnitts (11) zwischen dem vorderen und hinteren Bereich (111, 113) erstreckt und durch die Nut (12) in zwei Teile ausgebreitet wird, wobei der hintere Bereich (113) des Körperabschnitts (11) mit der Hinterradanordnung (30) schwenkbar verbunden ist und mit dem Sattel (13) verbunden ist.

3. Klappbares Balancefahrrad nach Anspruch 2, wobei die Vorderradanordnung (20) das Vorderrad (21) aufweist, das in einer Gabel (22) drehbar montiert ist, die an dem vorderen Bereich (111) des Körperabschnitts (11) schwenkbar montiert ist und mit einer Lenkstange (23) verbunden ist und von dieser gesteuert wird, die geeignet ist, von einer Bedienperson gegriffen und in Bezug auf den Rahmen (10) geschwenkt zu werden, um das klappbare Balancefahrrad zu lenken.

4. Klappbares Balancefahrrad nach Anspruch 2, wobei, wenn das Balancefahrrad in dem Aufbewahrungszustand ist, die beiden Armabschnitte (322) der Schwinggabel (32) an den beiden Teilen des mittleren Bereichs (112) des Körperabschnitts (11) anliegen.

5. Klappbares Balancefahrrad nach Anspruch 1, wobei die erste Befestigungsanordnung (40) ein erstes Befestigungselement (41) und einen ersten Halter (42) aufweist, der mit dem ersten Befestigungselement (41) wahlweise im Eingriff steht, wobei jede der beiden zweiten Befestigungsanordnungen (50) ein zweites Befestigungselement (51) und einen zweiten Halter (52) aufweist, der mit dem zweiten Befestigungselement (51) im Eingriff steht.

6. Klappbares Balancefahrrad nach einem der Ansprüche 1-5, wobei eine Sitzhöhe (H) als eine vertikale Distanz definiert ist, die sich von dem Sattel (13) des Rahmens (10) zu einer horizontalen Ebene erstreckt, wobei der Körperabschnitt (11) ferner eine Mehrzahl von Stellbohrungen (117) aufweist, die längs angeordnet sind und sich durch ein entfernt gelegenes Ende davon entgegengesetzt zu der Hinterradanordnung (30) erstrecken, wobei eine dritte Befestigungsanordnung (40) durch den Sattel (13) und die eine von der Mehrzahl von Stellbohrungen (117) hindurch eingreifbar ist, um zu bewirken, dass der Sattel (13) mit dem Rahmen (10) wahlweise verbunden ist.

7. Klappbares Balancefahrrad nach Anspruch 6, wobei, wenn die dritte Befestigungsanordnung (40) von dem Sattel (13) und der einen von der Mehrzahl von Stellbohrungen (117) getrennt ist, es möglich ist, den Sattel (13) in Bezug auf den Körperabschnitt (11) zu bewegen, wobei die dritte Befestigungsanordnung (40) geeignet ist, in eine andere von der Mehrzahl von Stellbohrungen (117) und den Sattel (13) wieder einzugreifen, um die Sitzhöhe (H) einzustellen.

## Revendications

1. Vélo d'apprentissage pliant comprenant :
un cadre (10) qui comprend une partie corps (11), une rainure (12) qui s'étend à travers la partie corps (11), et une selle (13) connectée à la partie corps (11) ;
un ensemble roue avant (20) monté de manière pivotante sur une extrémité du cadre (10), l'ensemble roue avant (20) comprenant une roue avant (21) ; et
un ensemble roue arrière (30) monté de manière pivotante sur l'autre extrémité du cadre (10) à l'opposé de l'ensemble roue avant (20), l'ensemble roue arrière (30) comprenant une roue arrière (31) montée de manière rotative sur celui-ci ;
dans lequel l'ensemble roue arrière (30) peut pivoter par rapport à la rainure (12) du cadre (10), et être reçu dans celle-ci, de façon à régler l'empattement (L) du vélo d'apprentissage pliant de manière à ce que le vélo d'apprentissage pliant puisse fonctionner entre un état opérationnel et un état rangé, l'empattement (L) étant défini comme étant la distance horizontale qui sépare les centres des roues avant et arrière (21, 31) ; et
dans lequel, lorsque le vélo d'apprentissage pliant se trouve dans l'état opérationnel, la roue arrière (31) de l'ensemble roue arrière (30) est exposée et disposée de manière solide au niveau de l'autre extrémité du cadre (10) ; et
dans lequel, lorsque le vélo d'apprentissage pliant se trouve dans l'état rangé, la roue arrière (31) de l'ensemble roue arrière (30) est reçue dans la rainure (12) du cadre (10) ; et
dans lequel l'empattement (L) du vélo d'apprentissage pliant agencé dans l'état rangé, est plus court que celui du vélo d'apprentissage pliant agencé dans l'état opérationnel de façon à faciliter son transport et son rangement ; et
dans lequel la partie corps (11) comprend un trou de verrouillage (115) qui s'étend à travers, l'ensemble roue arrière (30) comprenant la roue arrière (31) montée de manière rotative sur une extrémité distale d'une fourche rotative (32) de celui-ci, la fourche rotative (32) comprenant une partie connexion (321) et deux parties branches (322) qui s'étendent de manière respective à partir des deux côtés de la partie connexion (321), une pluralité d'ouvertures de verrouillage (323) s'étendant à travers la partie connexion (321), l'une de la pluralité d'ouvertures de verrouillage (323) pouvant être alignée et interconnectée avec le trou de verrouillage (115) de la partie corps (11), un premier ensemble fixation (40) pouvant venir en prise dans l'une de la pluralité d'ouvertures de verrouillage (323) de la fourche pivotante (32) et dans le trou de verrouillage (115) de la partie corps (11), de façon à ce que l'ensemble roue arrière (30) soit fixé de manière sélective par rapport au cadre (10) ; et
dans lequel une fente (114) est formée au niveau d'une extrémité distale de la partie corps (11) à l'opposé de la selle (13), la partie connexion (321) de la fourche pivotante (32) étant mise en prise dans la fente (114) de la partie corps (11) ; et
dans lequel la partie corps (11) comprend un trou de pivotement (116) qui s'étend à travers et qui est interconnecté avec la fente (114) de celle-ci, la fourche pivotante (32) comprenant des première et seconde ouvertures de pivotement (324, 325) qui s'étendent de manière respective à travers deux extrémités opposés de chacune des deux parties branches (322) de celle-ci, les deux ensembles fixations (50) étant mis en prise de manière respective dans la première ouverture de pivotement (324) de la fourche pivotante (32) et le trou de pivotement (116) de la partie corps (11), et étant mis en prise dans la seconde ouverture de pivotement (325) de la fourche pivotante (32).

2. Vélo d'apprentissage pliant selon la revendication 1, dans lequel la partie corps (11) définit des sections avant, milieu et arrière (111, 112, 113) de celui-ci, la section avant (111) de la partie corps (11) étant connectée de manière pivotante à la roue avant (20), la section milieu (112) de la partie corps (11) s'étendant entre les section avant et arrière (111, 113) et séparant les deux parties par la rainure (12), la section arrière (113) de la partie corps (11) étant connectée de manière pivotante à l'ensemble roue arrière (30) et étant connectée à la selle (13).

3. Vélo d'apprentissage pliant selon la revendication 2, dans lequel l'ensemble roue avant (20) comprend la roue avant (21) montée de manière rotative dans une fourche (22) montée de manière rotative sur la section avant (111) de la partie corps (11), et connectée à un guidon (23), et commandée par celui-ci, adapté de façon à être saisi et tourné par rapport au cadre (10) par un utilisateur de manière à faire tourner le vélo d'apprentissage pliant.

4. Vélo d'apprentissage pliant selon la revendication 2, dans lequel, lorsque le vélo d'apprentissage pliant se trouve dans l'état rangé, les deux parties branches (322) de la fourche pivotante (32) viennent en butée contre les deux parties de la section milieu (112) de la partie corps (11).

5. Vélo d'apprentissage pliant selon la revendication 1, dans lequel le premier ensemble fixation (40) comprend un premier dispositif de fixation (41) et un premier dispositif de retenue (42) mis en prise de manière sélective avec le premier dispositif de fixation (41), dans lequel chacun des deux deuxièmes ensembles fixations (50) comprend un deuxième dispositif de fixation (51) et un deuxième dispositif de retenue (52) mis en prise avec le deuxième dispositif de fixation (51).

6. Vélo d'apprentissage pliant selon l'une quelconque des revendications 1 à 5, dans lequel une hauteur de siège (H) est définie comme étant la distance verticale qui sépare la selle (13) du cadre (10) et un plan horizontal, la partie corps (11) comprenant en outre une pluralité d'alésages de réglage (117) agencés de manière longitudinale et qui s'étendent à travers une extrémité distale de celle-ci à l'opposé de l'ensemble roue arrière (30), un troisième ensemble fixation (40) pouvant être mis en prise à travers la selle (13) et l'un de la pluralité d'alésages de réglage (117) de façon à ce que la selle (13) soit connectée de manière sélective avec le cadre (10).

7. Vélo d'apprentissage pliant selon la revendication 6, dans lequel, lorsque le troisième ensemble fixation (40) n'est plus en prise avec la selle (13) et l'un de la pluralité d'alésages de réglage (117), la selle (13) peut se déplacer par rapport à la partie corps (11), le troisième ensemble fixation (40) pouvant de nouveau être mis en prise dans un autre de la pluralité d'alésages de réglage (117) et la selle (13), de façon à régler la hauteur du siège (H).
